# EUROPÄISCHE PATENTSCHRIFT

(11) **EP 0 695 087 B1**
(45) Veröffentlichungstag und Bekanntmachung des Hinweises auf die Patenterteilung: **24.03.1999**
(21) Anmeldenummer: 95110352.2
(22) Anmeldetag: 03.07.1995
(51) Int. Cl.: H04N 5/455

(54) **Schaltungsanordnung zur Zwischenfrequenzdemodulation für ein Videosignalverarbeitungsgerät**
Circuit for demodulating at intermediate frequency for a video signal processing apparatus
Circuit démodulateur à fréquence intermédiaire pour un dispositif de traitement de signal vidéo

(30) Priorität: 29.07.1994 DE 4427018
(43) Veröffentlichungstag der Anmeldung: 31.01.1996
(73) Patentinhaber: SIEMENS AKTIENGESELLSCHAFT, 80333 München (DE)
(72) Erfinder: Stepp, Richard, D-80796 München (DE); Fiesel, Hans, D-81545 München (DE)

(56) Entgegenhaltungen:
- EP-A- 0 478 821
- EP-A- 0 512 624
- US-A- 4 796 102
- IEEE TRANSACTIONS ON CONSUMER ELECTRONICS, Bd. 37, Nr. 4, 30.November 1991, NEW YORK US, Seiten 783-792, XP000275989 BRILKA J. ET AL: "AN ADVANCED 5V VIF-/SIF PLL FOR SIGNAL DETECTION IN TV SETS AND VTRS"

## Beschreibung

Die Erfindung betrifft eine Schaltungsanordnung zur Zwischenfrequenzdemodulation für ein Videosignalverarbeitungsgerät enthaltend:
- ein erstes Filter mit Bandpaßcharakteristik, dem ein bei der Zwischenfrequenz liegendes Eingangssignal zuführbar ist und durch das ein Videosignal in Zwischenfrequenzlage erzeugt wird,
- ein zweites Filter mit Bandpaßcharakteristik, dem das Eingangssignal zuführbar ist und durch das ein Videoträgersignal erzeugt wird,
- einen Demodulator, durch den das Videosignal in Zwischenfrequenzlage in das Basisband umgesetzt wird.

Die Erfindung betrifft außerdem ein Videosignalverarbeitungsgerät, das eine derartige Schaltungsanordnung enthält.

Bei Videosignalverarbeitungsgeräten, z. B. Fernsehgeräten, wird mittels eines Tuners das Frequenzband eines eingestellten Senders ausgewählt, aus dem wiederum der Frequenzbereich des eingestellten Senders auf eine konstante Zwischenfrequenz umgesetzt wird. Die im Restseitenbandverfahren übertragenen Videosignale sind auf einen Videoträger moduliert. Am Rand des Bildsignalspektrums liegt der Tonträger. Um eine möglichst geringe Beeinflussung des Videosignals und des Tonträgers bei der Umsetzung ins Basisband zu ermöglichen, wird der Videosignalträger wie in der DE 37 18 103 A1 beschrieben in einem weiteren Zweig mittels eines entsprechend ausgeführten Bandpaßfilters wiedergewonnen. Dieser wird dann im Videosignalzweig zur Umsetzung des Videosignals von der Zwischenfrequenzlage ins Basisband verwendet. Da der wiedergewonnene Videoträger möglichst phasengleich zum Videosignal in Zwischenfrequenzlage liegen soll, sind erhöhte Anforderungen an die jeweiligen Filter und gegebenenfalls vorgesehene Regelverstärker in bezug auf die Signalverzögerungszeit notwendig.

Die Aufgabe der Erfindung besteht darin, eine Schaltungsanordnung der eingangs genannten Art derart weiterzubilden, daß die vorgenannten Einschränkungen im Hinblick auf die Signallaufzeit der Funktionselemente verringert wird. Insbesondere soll der nachgebildete Videoträger möglichst frequenz- und phasengleich zum Videosignal in Zwischenfrequenzlage am Demodulator bereitstehen.

Diese Aufgabe wird dadurch gelöst, daß
- ein Oszillator vorgesehen ist, dem das Videoträgersignal zugeführt wird und durch den ein an das Videoträgersignal frequenzgekoppeltes Referenzsignal und ein dazu um 90° phasenverschobenes Referenzsignal erzeugt werden,
- ein erster und zweiter Mischer vorgesehen sind, denen jeweils das Referenzsignal zugeführt wird,
- dem ersten Mischer das Videosignal in der Zwischenfrequenzlage zugeführt wird,
- dem zweiten Mischer das über ein Filter mit Tiefpaßcharakteristik geführte Ausgangssignal des ersten Mischers zugeführt wird,
- ein dritter und vierter Mischer vorgesehen sind, denen jeweils das um 90° phasenverschobene Referenzsignal zugeführt wird,
- dem dritten Mischer das Videosignal in der Zwischenfrequenzlage zugeführt wird,
- dem vierten Mischer das über ein weiteres Filter mit Tiefpaßcharakteristik geführte Ausgangssignal des dritten Mischers zugeführt wird,
- die Ausgangssignale des zweiten und des vierten Mischers addiert und dem Demodulator zugeführt werden,
- die Filter mit Tiefpaßcharakteristik derart dimensioniert sind, daß sie im wesentlichen jeweils nur für einen Gleichsignalanteil durchlässig sind.

Ein Videosignalverarbeitungsgerät, das eine erfindungsgemäße Schaltungsanordnung enthält, ist in Anspruch 6 wiedergegeben.

Durch die erfindungsgemäße Schaltung wird eine Komponentenzerlegung des zwischenfrequenten Videosignals in bezug auf die orthogonalen Referenzsignale durchgeführt. Die Referenzsignale stehen in beliebiger Phasenbeziehung zum zwischenfrequenten Videosignal. Der aus den gewonnenen Komponenten wieder zusammengefügte, nachgebildete Videoträger ist phasengleich zum zwischenfrequenten Videosignal. Ein Phasenunterschied zwischen dem ausgefilterten Videoträger und dem zwischenfrequenten Videosignal bleibt ohne Einfluß auf den nachgebildeten Videoträger. Auch wenn die vom Oszillator nachgebildeten Referenzsignale nicht exakt der Frequenz des zwischenfrequenten Videosignals entsprechen sollten, kann ein geringer Frequenzunterschied ausgeglichen werden. Voraussetzung hierfür ist, daß die entstehenden Schwebungsfrequenzen innerhalb des Durchlaßbereichs der Tiefpaßfilter liegen.

In der US-Patentschrift 4 394 626 ist eine Schaltungsanordnung gezeigt, bei der ein PSK-Eingangssignal in zwei als Multiplizierer ausgeführte Phasendetektoren eingespeist wird, denen außerdem orthogonale, von einem VCO-Oszillator abgeleitete Signale zugeführt werden. Die Ausgangssignale der Phasendetektoren werden je einem Tiefpaßfilter zugeführt. Den Tiefpaßfiltern ist je ein weiterer Multiplizierer nachgeschaltet, der außerdem wiederum von einem der orthogonalen Signale angesteuert wird. Die Ausgangssignale der weiteren Multiplizierer werden in einer Verknüpfungsschaltung addiert. Die Schaltung eignet sich zur Dämpfung des Phasenjitters des PSK-Signals, wobei das Ausgangssignal auch schnellen Phasensprüngen des Eingangssignals folgen soll. Dadurch müssen die Tiefpaßfilter so dimensioniert werden, daß sie auch für das Nutzsignalspektrum durchlässig sind.

Im folgenden wird die Erfindung anhand der in der Zeichnung dargestellten Figuren näher beschrieben. Es zeigen:
- Figur 1: das Prinzipschaltbild eines Fernsehgeräts,
- Figur 2: das Prinzipschaltbild einer erfindungsgemäßen Zwischenfrequenzdemodulationsstufe und
- Figur 3: das Prinzipschaltbild einer Schaltung zur Phasennachführung.

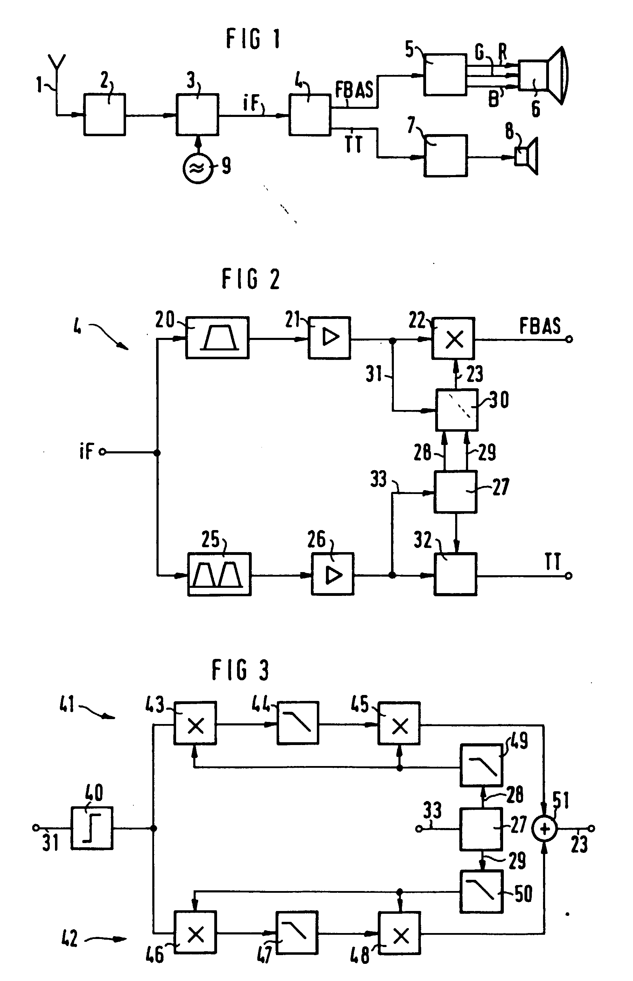

Das in Figur 1 gezeigte Fernsehgerät enthält einen Tuner 2, dem über eine Antenne 1 ein Antennensignal zuführbar ist. Im Tuner 2 wird eine Abstimmung auf das Frequenzband des eingestellten Senders durchgeführt. Mittels eines Mischers 3, dem das Ausgangssignal eines in der Frequenz veränderbaren Überlagerungsoszillators 9 zuführbar ist, wird der eingestellte Sender aus dem vom Tuner 2 ausgewählten Frequenzband auf die Zwischenfrequenz umgesetzt. Die Zwischenfrequenz liegt beispielsweise bei 38,9 MHz für den Videoträger. Das im auf die Zwischenfrequenz umgesetzten Videosignal ebenfalls enthaltene Tonsignal weist einen Tonträger bei 33,4 MHz auf. In einer Schaltungsanordnung 4 zur Zwischenfrequenzdemodulation werden einerseits das Videosignal im Basisband FBAS ohne den Tonträger und andererseits der Tonträger TT, der im allgemeinen FM-moduliert ist, zurückgewonnen. In einer Videosignalverarbeitungseinrichtung 5 werden aus dem Videosignal FBAS die Signale RGB zur Ansteuerung einer Bildröhre 6 erzeugt. Im Tonkanal wird in einer Verarbeitungseinrichtung 7 ein Signal zur Ansteuerung eines Lautsprechers 8 erzeugt.

Eine Ausführung der Einrichtung 4 ist in Figur 2 gezeigt. Der Schaltungsanordnung 4 wird als Eingangssignal das vom Tuner selektierte und dann auf die Zwischenfrequenz umgesetzte Frequenzband zugeführt. Dabei liegen der Videoträger des eingestellten Senders bei 38,9 MHz, der Tonträger bei 33,4 MHz. Ein Zwischenfrequenzfilter 20, dem das Signal IF zugeführt wird, filtert die dem eingestellten Sender zugeordneten Signalfrequenzen aus. Das Filter 20 ist üblicherweise als Nyquist-Filter ausgeführt. Dem ZF-Filter 20 ist ein Regelverstärker 21 nachgeschaltet, der dafür sorgt, daß das zwischenfrequente Videosignal in einem vorgegebenen Ausgangspegelbereich liegt. Das verstärkte, zwischenfrequente Videosignal wird in einem Mischer oder Demodulator 22 in das Basisbandsignal FBAS umgesetzt. Hierzu wird dem Mischer 22 ein in der Schaltung frequenz- und phasenrichtig nachgebildetes Videoträgersignal an einem Anschluß 23 eingespeist.

Außerdem weist die Schaltungsanordnung 4 ein Filter 25 auf, dem das Zwischenfrequenzeingangssignal IF zugeführt wird. Das Filter 25 ist für den Bildträger und den Tonträger in Zwischenfrequenzlage durchlässig. Über einen nachgeschalteten Regelverstärker 26 wird ein Oszillator 27 auf den durch den Bandpaß 25 ausgebildeten Videoträger synchronisiert. Der Oszillator weist hierzu einen Eingang 33 auf. Vorzugsweise wird für den Oszillator 27 ein Phasenregelkreis PLL oder ein frequenzsensitiver Phasenregelkreis FPLL verwendet. Der Oszillator 27 erzeugt an zwei Ausgängen 28, 29 zueinander um 90° phasenverschobene Referenzsignale. Diese sind zum am Anschluß 33 in den Oszillator eingespeisten Videosignal frequenzgekoppelt. Die Referenzsignale werden zusammen mit dem vom Regelverstärker 21 erzeugten zwischenfrequenten Videosignal einer Phasennachführungsschaltung 30 zugeführt, die ausgangsseitig den nachgebildeten Videoträger erzeugt, der am Anschluß 23 des Mischers 22 zur Videodemodulation eingespeist wird.

Der im Bandpaßfilter 25 gewonnene Tonträger TT wird einem Mischer 32 zugeführt und dort mit der vom Oszillator 27 nachgebildeten Videoträgerfrequenz umgesetzt. Am Ausgang des Mischers 32 liegt dann der Tonträger TT bei 5,5 MHz vor. Alternativ dazu, daß im Filter 25 sowohl der Videoträger als auch der Tonträger ausgefiltert werden, können zur Filterung des Videoträgers und des Tonträgers getrennte Kanäle mit je einem Bandpaßfilter, das für nur einen der jeweiligen Träger durchlässig ist, vorgesehen werden.

In der Figur 3 ist eine Detailrealisierung der Phasennachführungsschaltung 30 einschließlich des Oszillators 27 gezeigt. Am Anschluß 31 wird das zwischenfrequente, ZF-gefilterte Videosignal zugeführt. Dieses ist üblicherweise AM-moduliert, so daß durch einen Begrenzer 40 der amplitudenmodulierte Signalanteil im wesentlichen abgetrennt wird. Der Ausgang des Begrenzers 40 wird zwei mit ihren Signalpfaden parallel geschalteten Zweigen 41, 42 zugeführt. Der Zweig 41 enthält einen Mischer 43, der eingangsseitig mit dem Ausgang des Begrenzers 40 und mit dem Ausgang 28 für eines der Referenzsignale des Oszillators 27 verbunden ist. Die ausgangsseitigen Mischprodukte des Mischers 43 umfassen einen Gleichanteil sowie einen Anteil bei der doppelten Videoträgerfrequenz. Durch einen Tiefpaß 44 werden die Gleichsignalanteile weitergeleitet. An einem weiteren Mischer 45 wird der vom Tiefpaß 44 erzeugte Gleichsignalanteil mit dem Referenzsignal vom Anschluß 28 des Oszillators 27 gemischt. Am Ausgang des Mischers 45 entsteht das mit dem vom Tiefpaß 44 gelieferten Gleichsignalanteil gewichtete Referenzsignal des Anschlusses 28. Der andere Zweig 42 enthält in Hintereinanderschaltung in entsprechender Weise einen Mischer 46, ein Tiefpaßfilter 47 und einen weiteren Mischer 48. Anstelle des Referenzsignales des Anschlusses 28 wird ein dazu orthogonales, um 90° phasenverschobenes Referenzsignal vom Anschluß 29 des Oszillators 27 verwendet. Am Ausgang des Tiefpaßfilters 47 liegt dann wiederum ein Gleichsignalanteil an, mit dem im Mischer 48 das um 90° phasenverschobene Referenzsignal vom Anschluß 29 gewichtet wird.

Die an den Ausgängen der Tiefpaßfilter 44, 47 vorliegenden Gleichsignale stellen eine Komponentenzerlegung des vom Begrenzer 40 abgegebenen Signals in Bezug auf die orthogonalen, vom Oszillator 27 erzeugten Referenzträger dar. Vorzugsweise werden die orthogonalen Referenzsignale der Anschlüsse 28, 29 über je ein Tiefpaßfilter 49 bzw. 50 geführt. Die Tiefpaßfilter 49, 50 bewirken, daß die vom Oszillator 29 abgegebenen Referenzsignale, die bei digitaler Realisierung des Oszillators 27 im wesentlichen als Rechtecksignal vorliegen, geglättet werden. Die Ausgänge der Tiefpässe 49, 50 enthalten dann im wesentlichen nur die Grundwelle der Referenzsignale.

Die mit den Gleichsignalkomponenten bewerteten orthogonalen Referenzsignale an den Ausgängen der Mischer 45, 48 werden in einem Addierer 51 addiert. Das am Anschluß 23 abgreifbare Signal stimmt mit dem am Anschluß 33 des Oszillators 27 eingespeisten Signal in der Frequenz überein. Es stimmt außerdem mit der Phase des am Anschluß 31 eingespeisten zwischenfrequenten Videosignals überein. Die Phasenlage zwischen den Signalen an den Anschlüssen 31, 33 hat auf das Ausgangssignal am Anschluß 23 keinen Einfluß. Das am Anschluß 23 abgreifbare Signal ist folglich mit dem im Mischer 22 zu verarbeitenden trägerfrequenten Videosignal stets frequenzund phasengleich.

Die Schaltung der Figur 3 hat außerdem den Vorteil, daß eine geringe Frequenzabweichung zwischen den Signalen an den Anschlüssen 31, 33 kompensiert wird. Eine solche Frequenzabweichung führt an den Ausgängen der Mischer 43, 46 zu einer Schwebungsfrequenz, die über die Tiefpässe 44, 47 weitergeleitet wird, sofern die Schwebungsfrequenzen jeweils niedriger als die Grenzfrequenzen der Tiefpässe liegen. Die Tiefpässe sind zweckmäßigerweise mit einer Grenzfrequenz von 200 bis 300 kHz ausgelegt. Dies entspricht praktischen Werten für in Bipolarschaltungstechnik ausgeführte Tiefpässen mit niedrigstmöglicher Grenzfrequenz ihres Durchlaßbereichs. Wichtig ist, daß die Filter 44, 47 im wesentlichen nur für den Gleichsignalanteil durchlässig sind einschließlich der oben genannten Schwebungsfrequenzen. Keinesfalls sollen wesentliche Teile des Nutzsignalspektrums passierbar sein, das am Anschluß 31 der Phasennachführungsschaltung 30 eingespeist wird. Dies würde dazu führen, daß der nachgebildete Videoträger am Anschluß 23 geringfügig moduliert wäre, so daß eine störungsfreie Umsetzung in das Basisband nicht möglich wäre.

## Patentansprüche

1. Schaltungsanordnung zur Zwischenfrequenzdemodulation für ein Videosignalverarbeitungsgerät enthaltend:
- ein erstes Filter (20) mit Bandpaßcharakteristik, dem ein bei der Zwischenfrequenz liegendes Eingangssignal (IF) zuführbar ist und durch das ein Videosignal in Zwischenfrequenzlage erzeugt wird,
- ein zweites Filter (25) mit Bandpaßcharakteristik, dem das Eingangssignal (IF) zuführbar ist und durch das ein Videoträgersignal erzeugt wird,
- einen Demodulator (22), durch den das Videosignal in Zwischenfrequenzlage in das Basisband (FBAS) umgesetzt wird,
**dadurch gekennzeichnet,** daß
- ein Oszillator (27) vorgesehen ist, dem das Videoträgersignal zugeführt wird und durch den ein an das Videoträgersignal frequenzgekoppeltes Referenzsignal und ein dazu um 90° phasenverschobenes Referenzsignal erzeugt werden,
- ein erster und zweiter Mischer (43, 45) vorgesehen sind, denen jeweils das Referenzsignal zugeführt wird,
- dem ersten Mischer (43) das Videosignal in der Zwischenfrequenzlage zugeführt wird,
- dem zweiten Mischer (45) das über ein Filter (44) mit Tiefpaßcharakteristik geführte Ausgangssignal des ersten Mischers (43) zugeführt wird,
- ein dritter und vierter Mischer (46, 48) vorgesehen sind, denen jeweils das um 90° phasenverschobene Referenzsignal zugeführt wird,
- dem dritten Mischer (46) das Videosignal in der Zwischenfrequenzlage zugeführt wird,
- dem vierten Mischer (48) das über ein weiteres Filter (47) mit Tiefpaßcharakteristik geführte Ausgangssignal des dritten Mischers (46) zugeführt wird,
- die Ausgangssignale des zweiten und des vierten Mischers (45, 48) addiert und dem Demodulator (22) zugeführt werden,
- die Filter (44, 47) mit Tiefpaßcharakteristik derart dimensioniert sind, daß sie im wesentlichen jeweils nur für einen Gleichsignalanteil durchlässig sind.

2. Schaltungsanordnung nach Anspruch 1,
**dadurch gekennzeichnet,** daß
zwischen das erste Filter (20) mit Bandpaßcharakteristik und den Demodulator (22) ein Regelverstärker (21) geschaltet ist und daß zwischen das zweite Filter (25) mit Bandpaßcharakteristik und den Oszillator (27) ein Regelverstärker (26) geschaltet ist.

3. Schaltungsanordnung nach einem der Ansprüche 1 oder 2,
**dadurch gekennzeichnet,** daß
das Videosignal in Zwischenfrequenzlage dem ersten und dem dritten Mischer (43, 46) über einen Begrenzer (40) zugeführt wird.

4. Schaltungsanordnung nach einem der Ansprüche 1 bis 3,
**dadurch gekennzeichnet,** daß
das Referenzsignal und das um 90° phasenverschobene Referenzsignal den Mischern (43, 45; 46, 48) über je ein Tiefpaßfilter (49, 50) zugeführt werden.

5. Schaltungsanordnung nach einem der Ansprüche 1 bis 4,
**dadurch gekennzeichnet,** daß
ein Filter (25) mit Bandpaßcharakteristik vorgesehen ist, dem das Eingangssignal (IF) zuführbar ist und durch das ein Tonträgersignal in Zwischenfrequenzlage erzeugt wird, und ein Mischer (32), dem das Tonträgersignal und eines der Referenzsignale zugeführt werden und durch den der Tonträger (TT) erzeugt wird.

6. Gerät zur Videosignalverarbeitung, enthaltend eine Schaltungsanordnung zur Zwischenfrequenzdemodulation nach einem der Ansprüche 1 bis 5, enthaltend: Mittel (2, 3) zur Erzeugung des bei der Zwischenfrequenz liegenden Eingangssignals (IF), das der Schaltungsanordnung zugeführt wird, Mittel (5) zur Signalverarbeitung der Videosignale im Basisband für die Anzeige an einem Bildschirm (6) und den Bildschirm (6), dem die verarbeiteten Videosignale zugeführt werden.

## Claims

1. Circuit arrangement for intermediate-frequency demodulation for a video signal processing apparatus, containing:
- a first filter (20) having a bandpass characteristic, to which an input signal (IF) at the intermediate frequency can be fed and by which a video signal at the intermediate frequency is generated,
- a second filter (25) having a bandpass characteristic, to which the input signal (IF) can be fed and by which a video carrier signal is generated,
- a demodulator (22), by which the video signal at the intermediate frequency is converted into the baseband (CVBS),
characterized in that
- an oscillator (27) is provided, to which the video carrier signal is fed and by which a reference signal which is frequency-coupled to the video carrier signal and a reference signal which is phase-shifted through 90° with respect to the former reference signal are generated,
- a first and a second mixer (43, 45) are provided, to each of which the reference signal is fed,
- the video signal at the intermediate frequency is fed to the first mixer (43),
- the output signal of the first mixer (43), which output signal is passed via a filter (44) having a low-pass characteristic, is fed to the second mixer (45),
- a third and a fourth mixer (46, 48) are provided, to each of which the reference signal phase-shifted through 90° is fed,
- the video signal at the intermediate frequency is fed to the third mixer (46),
- the output signal of the third mixer (46), which output signal is passed via a further filter (47) having a low-pass characteristic, is fed to the fourth mixer (48),
- the output signals of the second and fourth mixers (45, 48) are added and fed to the demodulator (22),
- the filters (44, 47) having a low-pass characteristic are dimensioned in such a way that they are transmissive essentially in each case only for a DC signal component.

2. Circuit arrangement according to Claim 1,
characterized in that
a control amplifier (21) is connected between the first filter (20) having a bandpass characteristic and the demodulator (22),
and in that a control amplifier (26) is connected between the second filter (25) having a bandpass characteristic and the oscillator (27).

3. Circuit arrangement according to either of claims 1 and 2,
characterized in that
the video signal at the intermediate frequency is fed to the first and to the third mixer (43, 46) via a limiter (40).

4. Circuit arrangement according to one of Claims 1 to 3,
characterized in that
the reference signal and the reference signal phase-shifted through 90° are fed to the mixers (43, 45; 46, 48) via a respective low-pass filter (49, 50).

5. Circuit arrangement according to one of Claims 1 to 4, characterized in that a filter (25) having a bandpass characteristic is provided, to which the input signal (IF) can be fed and by which a sound carrier signal at the intermediate frequency is generated, and a mixer (32), to which the sound carrier signal and one of the reference signals are fed and by which the sound carrier (SC) is generated.

6. Apparatus for video signal processing, containing a circuit arrangement for intermediate-frequency demodulation according to one of Claims 1 to 5, containing: means (2, 3) for generating the input signal (IF) which is at the intermediate frequency and is fed to the circuit arrangement, means (5) for the signal processing of the video signals in the baseband for display on a screen (6), and the screen (6), to which the processed video signals are fed.

## Revendications

1. Circuit de démodulation à fréquence intermédiaire, destiné à un dispositif de traitement de signal vidéo et comprenant :
- un premier filtre (20) à caractéristique passe-bande, auquel un signal d'entrée (IF) se trouvant dans la fréquence intermédiaire peut être envoyé et par lequel un signal vidéo en fréquence intermédiaire est produit,
- un deuxième filtre (25) à caractéristique passe-bande, auquel le signal d'entrée (IF) peut être envoyé et par lequel un signal de porteuse vidéo est produit,
- un démodulateur (22) par lequel le signal vidéo en fréquence intermédiaire est converti en la bande de base (FBAS),
caractérisé par le fait que
- il est prévu un oscillateur (27) auquel le signal de porteuse vidéo est envoyé et par lequel un signal de référence couplé en fréquence au signal de porteuse vidéo et un signal de référence déphasé de 90° par rapport à celui-ci sont produits,
- il est prévu un premier et un deuxième mélangeur (43, 45) auxquels le signal de référence est envoyé,
- le signal vidéo en fréquence intermédiaire est envoyé au premier mélangeur (43),
- le signal de sortie du premier mélangeur (43) est envoyé par l'intermédiaire d'un filtre (44) à caractéristique passe-bas au deuxième mélangeur (45),
- il est prévu un troisième et un quatrième mélangeur (46, 48) auxquels le signal de référence déphasé de 90° est envoyé,
- le signal vidéo en fréquence intermédiaire est envoyé au troisième mélangeur (46),
- le signal de sortie du troisième mélangeur (46) est envoyé par l'intermédiaire d'un autre filtre (47) à caractéristique passe-bas au quatrième mélangeur (48),
- les signaux de sortie du deuxième et du quatrième mélangeur (45, 48) sont additionnés et sont envoyés au démodulateur (22),
- les filtres (44, 47) à caractéristique passe-bas sont dimensionnés de telle sorte qu'ils ne laissent sensiblement passer respectivement qu'une composante de signal continue.

2. Circuit selon la revendication 1,
caractérisé par le fait qu'un amplificateur de régulation (21) est branché entre le premier filtre (20) à caractéristique passe-bande et le démodulateur (22) et qu'un amplificateur de régulation (26) est branché entre le deuxième filtre (25) à caractéristique passe-bande et l'oscillateur (27).

3. Circuit selon l'une des revendications 1 ou 2,
caractérisé par le fait que le signal vidéo en fréquence intermédiaire est envoyé au premier et au troisième mélangeur (43, 46) par l'intermédiaire d'un limiteur (40).

4. Circuit selon l'une des revendications 1 à 3,
caractérisé par le fait que le signal de référence et le signal de référence déphasé de 90° sont envoyés aux mélangeurs (43, 45; 46, 48) à chaque fois par l'intermédiaire d'un filtre passe-bas (49, 50).

5. Circuit selon l'une des revendications 1 à 4,
caractérisé par le fait qu'il est prévu un filtre (25) à caractéristique passe-bande, auquel le signal d'entrée (IF) peut être envoyé et par lequel un signal de porteuse son en fréquence intermédiaire peut être produit, et un mélangeur (32), auquel le signal de porteuse son et l'un des signaux de référence peuvent être envoyés et par lequel la porteuse son (TT) est produite.

6. Dispositif pour le traitement de signal vidéo, comportant un circuit pour la démodulation à fréquence intermédiaire selon l'une des revendications 1 à 5, comprenant : des moyens (2, 3) pour la production du signal d'entrée (IF) qui se trouve dans la fréquence intermédiaire et qui est envoyé au circuit, des moyens (5) pour le traitement des signaux vidéo dans la bande de base en vue de l'affichage sur un écran (6) et l'écran (6) auquel les signaux vidéo traités sont envoyés.
